# EUROPEAN PATENT APPLICATION

(11) **EP 4 821 795 A1**
(43) Date of publication of application: **14.10.2026**
(21) Application number: 25169043.4
(22) Date of filing: 08.04.2025
(51) Int. Cl.: B62D 7/15, B62D 15/02, B62D 6/00

(54) **METHOD FOR CREATING A FEEDFORWARD CONTROLLER**

(71) Applicant: AVL Powertrain UK Ltd., Basildon, Essex SS15 6LN (GB)
(72) Inventor: Swellem, Ahmed, Coventry, CV1 3DA (GB); Mousa, Mohamed, Coventry, CV4 8GF (GB); Collins, Florence, London, SE3 9HE (GB)
(74) Representative: Gamper, Bettina

(57) **Abstract**

the present invention provides a method for creating a feedforward controller for controlling a direct yaw moment of a vehicle and/or for controlling a steering of a vehicle (1) with rear axle steering, comprising the steps of:

- selecting a transfer function of a reference vehicle model,
- performing steering maneuvers at different predetermined vehicle speeds with the vehicle,
- collecting vehicle data, including the yaw rate response to a steering wheel angle during the steering maneuvers,
- identifying a first transfer function of a direct yaw moment to the yaw rate for the vehicle speeds,
- Identifying a second transfer function of the steering wheel angle to the yaw rate for the different vehicle speeds
- defining a semi-empirical model ${r}_{i}^{SI}$(s), as the sum of the first transfer function multiplied by the direct yaw moment and the second transfer function multiplied by the steering wheel angle; and
- creating the feedforward controller *M_{Z_{FF}} by* inverting the semi-empirical model.

## Description

The present invention relates to a method for creating a feedforward controller for controlling a direct yaw moment of a vehicle, a corresponding feedforward controller as well as a method for controlling a direct yaw moment of a vehicle with such a feedforward controller.

The present invention is based on known methods related to direct yaw moment control, vehicle dynamics control and semi-empirical modelling. While there exist powerful control strategies such as MPC, H∞, Sliding Mode Control and Optimal Control, these strategies often come at the cost of complexity and computational effort making them unsuitable for automotive OEMs to adopt. It is also important to note that these strategies are often developed within research, while automotive OEMs prefer to use the efficient and robust methods to be discussed below, principally using a simplified physical vehicle model known as the Linear Single-Track Model (LSTM).

In this domain 1) Dynamic Linear Single-Track Model (LSTM), 2) Static Linear Single-Track Model and 3) Feedback based control strategies are known in the art.

**The Dynamic Linear Single-Track Model (LSTM)** LSTM based feedforward control design involves using the linear single-track model and a model inversion to formulate the feedforward control term. ${M}_{{z}_{FF}} \left(s\right) = \frac{{r}_{ref} \left(s\right) - {G}_{rδ}^{LSTM} \left(s\right) ⋅ δ \left(s\right)}{{G}_{{rM}_{Z}}^{LSTM}}$

**The Static Linear Single-Track Model** based feedforward control design involves using the linear single-track model to define the steady state or static feedforward direct yaw moment demand. The static direct yaw moment demand may be passed through a low pass filter or a second order filter to avoid unwanted transients.

**The Feedback** based control strategy may involve using the error between the measured vehicle yaw rate and the calculated reference yaw rate from a reference vehicle model to generate the direct yaw moment control demand.

It may be common to use a feedback controller, for instance a PID controller, in conjunction with a method using any of the linear single-track model methods 1) and 2) to compensate for modelling errors.

A disadvantage of the known solutions is that Methods 1) and 2) rely on accurately estimating the cornering stiffness parameters for all four tires *Cₙ*. However, these parameters change with handling conditions. Therefore, these methods are inaccurate. ${\left.{C}_{n}=\frac{\partial {F}_{{y}_{n}}}{\partial {α}_{n}}\right|}_{{a}_{n} \approx 0 , {F}_{{z}_{n}} , {γ}_{n} , {λ}_{n}}$

Additionally, the use of the LSTM in methods 1) and 2) does not account for notable characteristics such as the tyre friction circle, i.e. the interaction of lateral force and longitudinal slip (consistent with the assumption of constant velocity) and lateral friction force saturation at higher lateral accelerations (>~6 *m*/*s*²)*,* as well as the omission of critical dynamic effects, such as lateral load transfer, roll steer, compliance and roll camber, which significantly impacts the fidelity of the LSTM in both transient and steady-state conditions.

Using only a feedback controller, as in method 3), may create a closed-loop response that is highly sensitive to automotive-grade yaw rate sensor noise. This method often may require filtering the feedback noise using a Kalman filter or an extended Kalman filter along with the LSTM, increasing computational requirements and calibration effort for the OEM.

The purpose of the present invention is to overcome, at least in part, the disadvantages described above in a computationally efficient and simple manner.

The above problem is solved by a method for creating a feedforward controller as defined by claim 1, a feedforward controller as defined by claim 10 and a method for controlling the direct yaw moment of a vehicle as defined by claim 11. Additional features and details of the invention can be found in the dependent claims, the description and the drawings. Features and details described in connection with the method according to the invention also apply in connection with the feedforward controller and the method for controlling the direct yaw moment of a vehicle and vice versa, respectively, so that with regard to the disclosure of the individual aspects of the invention, mutual reference is or can be made.

According to the invention, a method creates a feedforward controller which enables controlling a direct yaw moment of a vehicle and/or enables controlling a steering of a vehicle with rear axle steering.

Such a method is characterised by the following steps:
- selecting a transfer function of a reference vehicle model,
- performing steering maneuvers at different predetermined vehicle speeds with the vehicle,
- collecting vehicle data, including the yaw rate response to a steering wheel angle during the steering and direct yaw moment maneuvers,
- identifying a first transfer function of a direct yaw moment to the yaw rate for the vehicle speeds,
- Identifying a second transfer function of the steering wheel angle to the yaw rate for the vehicle speeds
- defining a semi-empirical model, as the sum of the first transfer function multiplied by the direct yaw moment and the second transfer function multiplied by the steering wheel angle;
- creating the feedforward controller by inverting the semi-empirical model.

The core idea of a method according to the invention is that a number of highly accurate transfer function models of the vehicle's yaw rate response can be identified to determine the required direct yaw moment for reference tracking. This can be done by a combination of a physical model structure with empirical model parameters. Therefore, the invention provides a semi-empirical feedforward controller. Controlling a direct yaw moment can mean to control a yaw rate only, to control a sideslip angle only, controlling a direct yaw moment or to control a yaw rate and a sideslip angle simultaneously. A direct yaw moment is the component of a torque about the yaw axis of the vehicle. In the last step of the method, the feedforward controller *M_{Z_{FF}}* is a result of the inverted model. The model can be rearranged such that the feedforward controller is the subject of the formula and can be calculated directly. Direct yaw moment control means using longitudinal forces, for instance generated by electric machine torques to generate a yaw moment. Rear axle steering operates by changing the vehicles kinematics and slip angle of the rear tyres. The invention can generate feedforward controllers for both direct yaw moment control and rear axle steering control. In the case where the method is used for creating a feedforward controller for controlling a steering of a vehicle with rear axle steering, the rear axle steering is operated in such a way that the rear left and right wheels of the steered rear axis are preferably steered with the same angle in the same direction.

It can bring advantages if the collected vehicle data is filtered by a second order low pass filter.

This can be done during or before the parameter estimation to optimize the parameter estimation if the frequency range of interest. A low pass filter *ℓ*(*s*) may be defined as $l \left(s\right) = \frac{{{ω}_{n}}^{2}}{{s}^{2} + 2 {ζω}_{n} + {{ω}_{n}}^{2}}$

It further brings advantages if the feedforward controller consists of a number of different sub-models for each of the vehicle speeds and a blending function, wherein a control action for a current speed is calculated by calculating a direct yaw moment as a result of the blending function blending a first sub-model of a vehicle speed lower than the present speed and a second sub-model of a vehicle speed higher than the present speed.

In this case the system identification feedforward formulation ${M}_{{Z}_{{FF}_{i}}} \left(s\right)$ may calculate a plurality of direct yaw moment demands from a plurality of identified vehicle models which are blended into a single control action based on the vehicle speed. If the vehicle speeds chosen for the excitation and identification are discretized every e.g. 10 kph, the demanded feedforward direct yaw moment could be a weighted function of the nearest two system identification controllers to the vehicles current speed.

Advantageously, the vehicle speed of a performed steering maneuver is constant. The performed steering manoeuvres may be completed at discrete vehicle speeds within a defined range of operation for the control system (e.g. every 10 kph from 50 to 250 kph). This creates a number of data sets N for the number of chosen vehicle speeds (e.g. N=21). The manoeuvres are completed once with steering wheel angle as the input and another with direct yaw moment as the input, giving a total number of data sets of 2N.

It is further advantageous if the steering maneuvers comprise a steering wheel input designed as a linearly swept sine wave. In particular, this may involve the steering wheel input frequency being in the range of 0.1 Hz to 6 Hz, preferably in the range of 0.2 Hz to 4 Hz.

In case a linearly swept sine wave is used as the steering wheel input to extract datasets ${\left\{{I}_{{rδ}_{SW}}:{O}_{{rδ}_{SW}}\right\}}_{i}$ where *M_{z}* = 0 and V = i (constant speed). The steering wheel input can be described as, ${δ}_{SW} = A ⋅ sin \left[2π\left({f}_{0}t+\frac{{k}_{f}}{2}{t}^{2}\right)\right]$

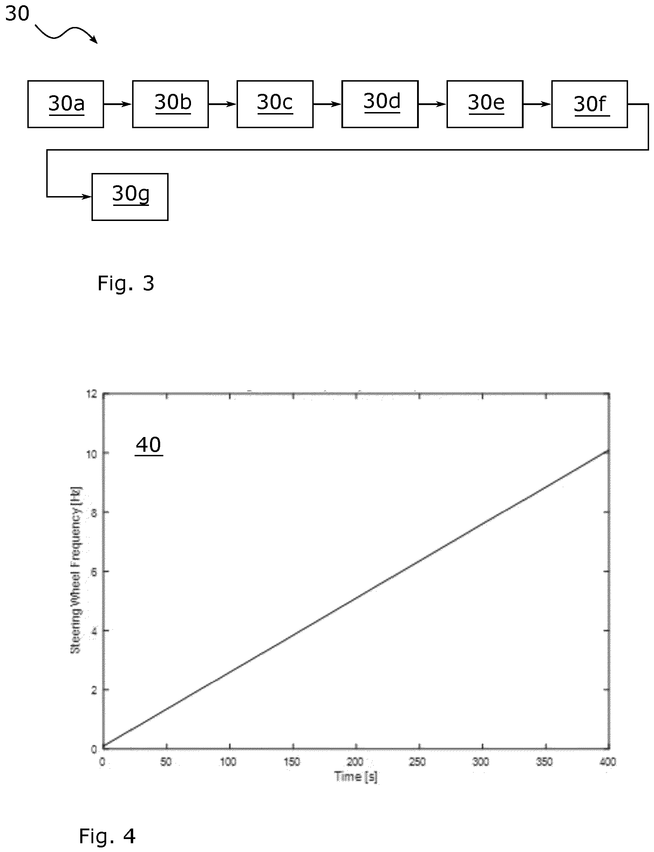

Where *k_{f}* is the rate of change of frequency with time and *f*₀ is the starting frequency of the manoeuvre. Figure 3 shows the profile of steering wheel angle frequency, where *k_{f} =* 0.025 and *f*₀ = 0.1 Hz. To guarantee the accuracy of the identification, different amplitudes of swept sine wave inputs A may be used at a given vehicle speed, provided that the amplitude of lateral acceleration remains less than 1 *m*/*s*² during the manoeuvre. Hence, if there are P amplitudes used at each vehicle speed, for each input, there are now *P*2N* data sets. These data sets can be used to estimate the parameters of the transfer functions ${G}_{{rδ}_{i}}^{SI} \left(s\right)$ and ${G}_{{rM}_{{Z}_{i}}}^{SI} \left(s\right)$*.* The identification can be repeated for each vehicle speed *(and amplitude)* data set with an appropriate weighting prefilter passband of ℓ(*s*) for the selected vehicle speed

Further advantages are obtained if the vehicle is steered on its rear wheel axis. The rate excitation datasets ${\left\{{I}_{{rδ}_{RA}}:{O}_{{rδ}_{RA}}\right\}}_{i}$ may be extracted using rear wheel steering as the input to identify a transfer function of rear axle steering angle input to yaw rate output.

Therefore, it is also advantageous if the vehicle is a virtual vehicle in form of a model.

Using the excitation inputs from the steering manoeuvres described above, the frequency spectrums of the yaw rate response to the steering wheel angle can be collected through simulation.

It brings further advantages when the feedforward controller is created for different driving modes.

This may be done by performing the steps of the method not only for different vehicle speed, but also for different driving modes. This way the method may specifically include the steps of
- performing steering maneuvers at different driving modes;
- identifying a first transfer function of a direct yaw moment to the yaw rate for the different driving modes; and
- Identifying a second transfer function of the steering wheel angle to the yaw rate for the different driving modes.

A second subject of the present invention is a feedforward controller created one of the methods according to any of the claims 1 to 9.

A third subject of the present invention is a direct yaw moment controller comprising a feedforward controller according to claim 10, a feedback controller (18) and a control fusion, wherein the fusion control is adapted to controlling the fusion of the feedforward controller and the feedback controller 18 based on a measured and/or estimated lateral acceleration of the vehicle.

A fourth subject of the present invention is a method for controlling a direct yaw moment of a vehicle and/or for controlling a steering of a vehicle with rear axle steering, wherein a current speed and a current steering wheel angle of the vehicle is measured, and actuator demands are calculated by a feedforward controller according to claim 10 or a direct yaw moment controller according to claim 11. Actuator demands can relate to various actuators, in particular the electric motors and/or the steering actuators, particularly the actuators of the rear wheel steering.

Further advantages, features and details of the invention will become apparent from the following description, in which, with reference to the drawings, examples of the invention are described in detail. The following figures show schematically:
- Fig. 1:: a vehicle whose direct yaw moment can be controlled by a feedforward controller created by the invention,
- Fig. 2:: a vehicle dynamics controller comprising a feedforward controller according to the invention and a feedback controller.
- Fig. 3:: a method for creating a feedforward controller according to an embodiment of the invention,
- Fig. 4: a profile 40 of steering wheel angle frequency used in steering manoeuvres,
- Fig. 5: a profile of the steering wheel angle used in the steering manoeuvres,
- Fig. 6: the profile of the torque demands for electric motors used in the steering manoeuvres,
- Fig. 7: the rear wheel steering angle demand calculated using the excitation input,
- Fig. 8: the yaw rate response to the direct yaw moment excitation input,
- Fig. 9: a way of calculating a feedforward direct yaw moment demand from a plurality of vehicle models, and
- Fig. 10: two different system identification controllers and a resulting feedforward direct yaw moment demand after weighting.

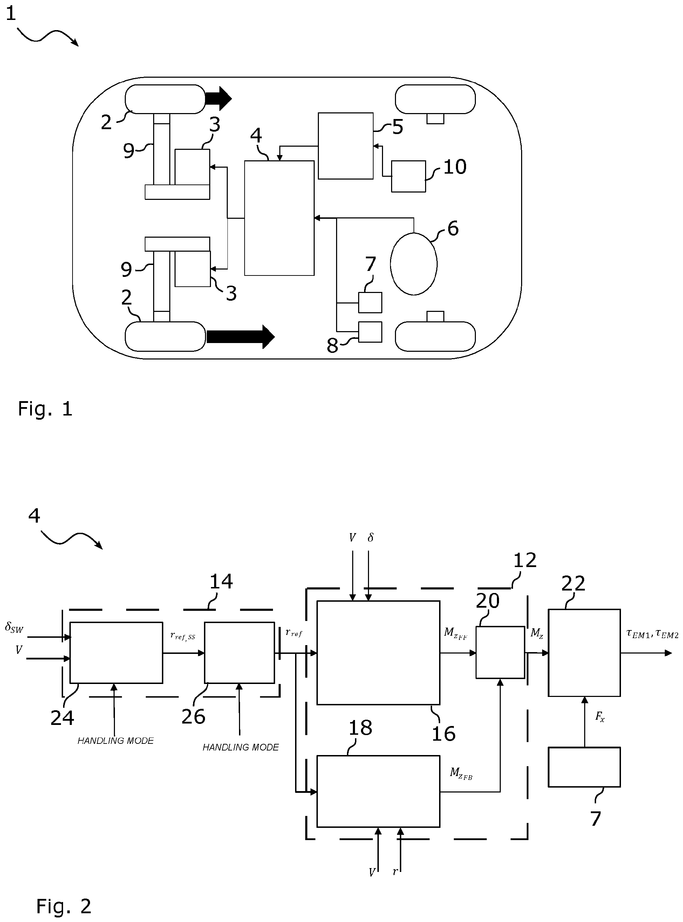

Figure 1 displays a vehicle 1 to be controlled by a feedforward controller for controlling a direct yaw moment of the vehicle 1. The feedforward controller is based on a semi-empirical model which is built from excitation data gathered directly from the vehicle 1. This data is collected by performing specific manoeuvres at various speeds and in one or more vehicle driving modes. The vehicle tires 2 are accelerated by separate electric machines 3. The vehicle 1 is steered on its rear wheel axis 9. A vehicle dynamics controller 4 controls the electric machines 3. The vehicle dynamics controller 4 receives its input from a vehicle dynamics observer 5 as well as the acceleration pedal 7, the brake pedal 8 as well as the steering wheel angle sensor 6.An inertial measurement unit 10 measures the state feedback and forwards this data to the vehicle dynamics observer 5. A feedforward controller created by a method according to the invention may be incorporated in the vehicle dynamics controller 4 of the vehicle 1.

The vehicle dynamics controller 4 is displayed in more detail in Figure 2. It employs system identification techniques to estimate transfer function parameters, capturing the vehicle's 1 yaw rate response. The vehicle's uncontrolled handling response can be analysed, both in the time and frequency domains using the identified transfer function models. Using this comprehensive model, the vehicle dynamics controller calculates the required direct yaw moment demand while still maintaining a low computational effort, enabling effective torque vectoring and/or rear wheel steering and ultimately enhancing vehicle stability and responsiveness.

The vehicle dynamics controller assumes a typical vehicle architecture as shown in figure 1, where the direct yaw moment actuators are the vehicles electric traction motors; EM1 and EM2 3. The main inputs of the control system are: a steering wheel angle *δ_{SW}* measured by a steering wheel angle sensor 6, a yaw rate r measured by the vehicle dynamics observer 5 and/or the inertial measurement unit 10, a lateral acceleration *a_{y}* measured by the vehicle dynamics observer 5 and/or the inertial measurement unit 10, the vehicle speed, also measured by the vehicle dynamics observer 5 and/or the inertial measurement unit 10, the accelerator pedal position, measured by the accelerator pedal 7 and the brake pedal position, measured by the brake pedal 8.

The reference vehicle model 14 computes the reference yaw rater*_{ref}.* The reference vehicle model *r_{ref}*(*s*) consists of a reference steady state model *r_{ref_{SS}}* and a reference dynamics model *r_{dyn}*(*s*)*.* There are different reference models available for the driver to choose using a *HANDLING MODE* input. The modes are used to determine the reference understeer and transient characteristics. ${r}_{ref} \left(s\right) = {r}_{{ref}_{SS}} ⋅ {r}_{dyn} \left(s\right)$

This approach allows the separation of steady state and transient characteristics which is done to allow easier calibration of the reference vehicle model to meet vehicle dynamics targets during development.

A linear single-track model may be used to calculate the reference steady state yaw rate, according to ${r}_{{ref}_{ss}} = {δ}_{SW} ⋅ {k}_{W} ⋅ \frac{V}{l \left({K}_{US}⋅{V}^{2}+1\right)}$

Where *k_{w}* - steering rack ratio and *K_{US}* - understeer gradient. The reference understeer characteristics may compute the desired understeer gradient using the handling mode, and vehicle speed, defined offline and stored in look-up tables.

The reference understeer characteristic may be defined using the identified transfer function parameters *K̂*₁(*i*) and *ω̂*_{*n*₁}(*i*) to identify a benchmark to improve. The passive vehicle (benchmark) understeer characteristic may be expressed as, ${G}_{{rδ}_{i}}^{SI} \left(0\right) = \frac{{\hat{K}}_{1} \left(i\right)}{{\hat{ω}}_{n 1} {\left(i\right)}^{2}} = \frac{i}{l \left({K}_{US}⋅{i}^{2}+1\right)}$

Where i - vehicle speed of identified model and, ${G}_{{rδ}_{i}}^{SI} \left(0\right)$ - steady state gain of identified transfer function ${G}_{{rδ}_{i}}^{SI} \left(s\right)$.

The direct yaw moment can be calculated, for instance from a feedback contribution and a feedforward contribution, which may be summed, saturated and rate limited to calculate the total direct yaw moment demand. ${M}_{z} = {M}_{{Z}_{FF}} + {M}_{{Z}_{FB}}$

A variety of feedback controllers may be used, e.g. sliding mode control, PID control, where the reference is compared the measured yaw rate r to generate the direct yaw moment demand*M_{Z_{FB}}*.

The system identification feedforward controller 16 uses the semi-empirical models estimated from excitation datasets to calculate the feedforward contribution *M_{Z_{FF}}.*

The feedback controller 18 is a PI controller and is considered as the secondary control action, its purpose is to remove steady state errors which arise from parameter estimation errors within the system identification feedforward controller 16 and maintain vehicle stability in the nonlinear slip region of the tire.

The System Identification (SI) feedforward controller 16 as well as the feedback controller 18 are parts of a direct yaw moment Controller 12 which computes the SI-feedforward direct yaw moment demand *M_{Z_{FF}}* and a feedback direct yaw moment demand *M_{Z_{FB}}* which are summed in a control fusion 20 to calculate a total demanded direct yaw moment *M*_{Z} which also serves as a direct yaw moment input to the control allocator 22. The Control Allocator 22 translates the driver and direct yaw moment demands to actuator demands. One of the driver torque demands is the driver torque demand from the accelerator pedal*Fₓ.* The actuator demands include the rear left electric machine torque demand *τ*_{*EM*1} and the rear right electric machine torque demand *τ*_{*EM*2}*.* The steering wheel angle input *δ_{SW}* as well as the vehicle speed V, a measured or estimated yaw rate r and a measured or estimated lateral acceleration *a_{y}* are used as inputs in different sections of the vehicle dynamics controller 4.

Figure 3 displays a method 30 for creating a feedforward controller for controlling a direct yaw moment of a vehicle 1 according to the invention. The method comprises 7 steps of:
First step 30a: selecting a transfer function of a reference vehicle model,
Second step 30b: performing steering maneuvers at different predetermined vehicle speeds V with the vehicle 1,
Third step 30c: collecting vehicle data, including the yaw rate response r to a steering wheel angle *δ_{SW}*(*s*) during the steering maneuvers,
Fourth step 30d: identifying a first transfer function of a direct yaw moment *M_{z}*(*s*) to the yaw rate for the vehicle speeds,
Fifth step 30e: Identifying a second transfer function of the steering wheel angle to the yaw rate for the different vehicle speeds
Sixth step 30f: defining a semi-empirical model ${r}_{i}^{SI} \left(s\right)$, as the sum of the first transfer function multiplied by the direct yaw moment and the second transfer function multiplied by the steering wheel angle; and
Seventh step 30g: creating the feedforward controller *M_{Z_{FF}}* by inverting the semi-empirical model ${r}_{i}^{SI} \left(s\right)$.

The numbering of the steps does not necessarily mean that the steps have to be performed in the order of the numbering.

The structure of the semi empirical model ${r}_{i}^{SI} \left(s\right)$ as defined in the sixth step, assumes the same structure and order of the Linear Single-Track Model (LSTM) which can be described as ${r}^{SI} \left(s\right) = {G}_{rδ}^{SI} \left(s\right) ⋅ {δ}_{SW} \left(s\right) + {G}_{{rM}_{z}}^{SI} \left(s\right) ⋅ {M}_{z} \left(s\right)$ where: ${G}_{{rδ}_{SW}}^{SI} \left(s\right) = {k}_{w} ⋅ \frac{{\hat{K}}_{1} \left({\hat{τ}}_{1}s+1\right)}{{s}^{2} + 2 {\hat{ζ}}_{1} {\hat{ω}}_{{n}_{1}} + {{\hat{ω}}_{{n}_{1}}}^{2}}$

Is the transfer function of yaw rate to steering input, and ${G}_{{rM}_{z}}^{SI} \left(s\right) = \frac{{\hat{K}}_{2} \left({\hat{τ}}_{2}s+1\right)}{{s}^{2} + 2 {\hat{ζ}}_{2} {\hat{ω}}_{{n}_{2}} + {{\hat{ω}}_{{2}_{n}}}^{2}}$ is the transfer function of yaw rate to direct yaw moment input

The parameters of both transfer functions (*K̂*₁*, τ̂*₁*,* ζ̂₁, ω̂_{*n*₁} ...) are estimated from their respective excitation datasets. It is important to note that the model structure shown above assumes a constant vehicle speed. A more practical representation of this skeleton model is: ${r}_{i}^{SI} \left(s\right) = {G}_{{rδ}_{i}}^{SI} \left(s\right) ⋅ {δ}_{SW} \left(s\right) + {G}_{{rM}_{zi}}^{SI} \left(s\right) ⋅ {M}_{z} \left(s\right)$

Where i = V (vehicle speed), this implies that the complete semi-empirical model consists of a plurality of estimated transfer function models, estimated from a plurality of excitation datasets. Hence, the estimated transfer function parameters are parametrized by vehicle speed, e.g. *K̂*₁ = *K̂*₁(*i*)*.* In contrast to this, the LSTM defines the transfer function parameters as functions of vehicle mass, front/rear cornering stiffness, yaw inertia, wheelbase, front semi-wheelbase and vehicle speed.

It is becoming increasingly common for passenger vehicle to have adaptive suspension and steering systems which may vary the chassis stiffness, damping or steering ratio based on the vehicle mode chosen by the driver. Hence, it may be useful to extend the model structure to account for different driving modes j, as well as different vehicle speeds i. ${r}_{ij}^{SI} \left(s\right) = {G}_{{rδ}_{ij}}^{SI} \left(s\right) ⋅ {δ}_{SW} \left(s\right) + {G}_{{rM}_{zij}}^{SI} \left(s\right) ⋅ {M}_{z} \left(s\right)$

Denoting that the estimated transfer function parameters are functions of vehicle speed as well as vehicle mode, e.g. *K̂*₁ *= K̂*(*i,j*)*.*

Given the structure of the semi-empirical model, the chosen excitation input may be repeated at discrete vehicle speeds within a defined range of operation for the control system (e.g. every 10 kph from 50 to 200 kph). This generates the excitation datasets (input-output data) ${\left\{{I}_{{rδ}_{SW}}:{O}_{{rδ}_{SW}}\right\}}_{i}$ and ${\left\{{I}_{{rM}_{z}}:{O}_{{rM}_{z}}\right\}}_{i}$*,* or, $i = \left(\begin{matrix}50 \\ 60 \\ ⋮ \\ 200\end{matrix}\right) kph$ ${\left\{{I}_{{rδ}_{SW}}:{O}_{{rδ}_{SW}}\right\}}_{i} = \left(\begin{matrix}{\left\{{I}_{{rδ}_{SW}}:{O}_{{rδ}_{SW}}\right\}}_{50} \\ {\left\{{I}_{{rδ}_{SW}}:{O}_{{rδ}_{SW}}\right\}}_{60} \\ ⋮ \\ {\left\{{I}_{{rδ}_{SW}}:{O}_{{rδ}_{SW}}\right\}}_{200}\end{matrix}\right)$ ${\left\{{I}_{rMz}:{O}_{{rM}_{z}}\right\}}_{i} = \left(\begin{matrix}{\left\{{I}_{rMz}:{O}_{rMz}\right\}}_{50} \\ {\left\{{I}_{rMz}:{O}_{rMz}\right\}}_{60} \\ ⋮ \\ {\left\{{I}_{rMz}:{O}_{rMz}\right\}}_{200}\end{matrix}\right)$

For brevity rear-axle steering input is omitted, however follows the same method. The excitation inputs should hence be applied at a constant vehicle speed equal to i throughout the entire manoeuvre. The datasets ${\left\{{I}_{{rδ}_{SW}}:{O}_{{rδ}_{SW}}\right\}}_{i}$ are used to estimate the transfer functions ${G}_{{rδ}_{{SW}_{i}}}^{SI} \left(s\right)$*.* The datasets ${\left\{{I}_{rMz}:{O}_{rMz}\right\}}_{i}$ are used to estimate the transfer functions ${G}_{{rM}_{{z}_{i}}}^{SI} \left(s\right)$*,* where *I_{rδ_{SW}}* = *δ_{SW}, I_{rM_{z}} = M_{z}* and *O_{rδ_{SW}} = O_{rM_{z}}* = r. Such that, for example, ${\left\{{I}_{{rδ}_{SW}}:{O}_{{rδ}_{SW}}\right\}}_{50}$ is used to estimate the transfer function model ${G}_{{rδ}_{{SW}_{50}}}^{SI} \left(s\right)$*.* If the extended model structure is used, the excitation manoeuvres must be repeated at each vehicle speed equal to i and vehicle mode equal to *j* (e.g. Comfort, Sport, Sport Plus), i.e. ${\left\{{I}_{{rδ}_{SW}}:{O}_{{rδ}_{SW}}\right\}}_{ij}$ and ${\left\{{I}_{rMz}:{O}_{rMz}\right\}}_{ij}$ or, $j = \left(\begin{matrix}C \\ S \\ SP\end{matrix}\right)$ ${\left\{{I}_{{rδ}_{SW}}:{O}_{{rδ}_{SW}}\right\}}_{ij} = \left(\begin{matrix}{\left\{{I}_{{rδ}_{SW}}:{O}_{{rδ}_{SW}}\right\}}_{50 C} & ⋯ & {\left\{{I}_{{rδ}_{SW}}:{O}_{{rδ}_{SW}}\right\}}_{50 SP} \\ ⋮ & ⋱ & ⋮ \\ {\left\{{I}_{{rδ}_{SW}}:{O}_{{rδ}_{SW}}\right\}}_{200 C} & ⋯ & {\left\{{I}_{{rδ}_{SW}}:{O}_{{rδ}_{SW}}\right\}}_{200 SP}\end{matrix}\right) ,$ ${\left\{{I}_{{rM}_{Z}}:{O}_{{rM}_{Z}}\right\}}_{ij} = \left(\begin{matrix}{\left\{{I}_{{rM}_{Z}}:{O}_{{rM}_{Z}}\right\}}_{50 C} & ⋯ & {\left\{{I}_{{rM}_{Z}}:{O}_{{rM}_{Z}}\right\}}_{50 SP} \\ ⋮ & ⋱ & ⋮ \\ {\left\{{I}_{{rM}_{Z}}:{O}_{{rM}_{Z}}\right\}}_{200 C} & ⋯ & {\left\{{I}_{{rM}_{Z}}:{O}_{{rM}_{Z}}\right\}}_{200 SP}\end{matrix}\right)$

A linearly swept sine wave is used as the steering wheel angle input to extract datasets ${\left\{{I}_{{rδ}_{SW}}:{O}_{{rδ}_{SW}}\right\}}_{i}$ where *M_{z}* = 0 and V = i (constant speed). The steering wheel input can be described as, ${δ}_{SW} = A ⋅ sin \left[2π\left({f}_{0}t+\frac{{k}_{f}}{2}{t}^{2}\right)\right]$

Where *k_{f}* is the rate of change of frequency with time and *f*₀ is the starting frequency of the manoeuvre.

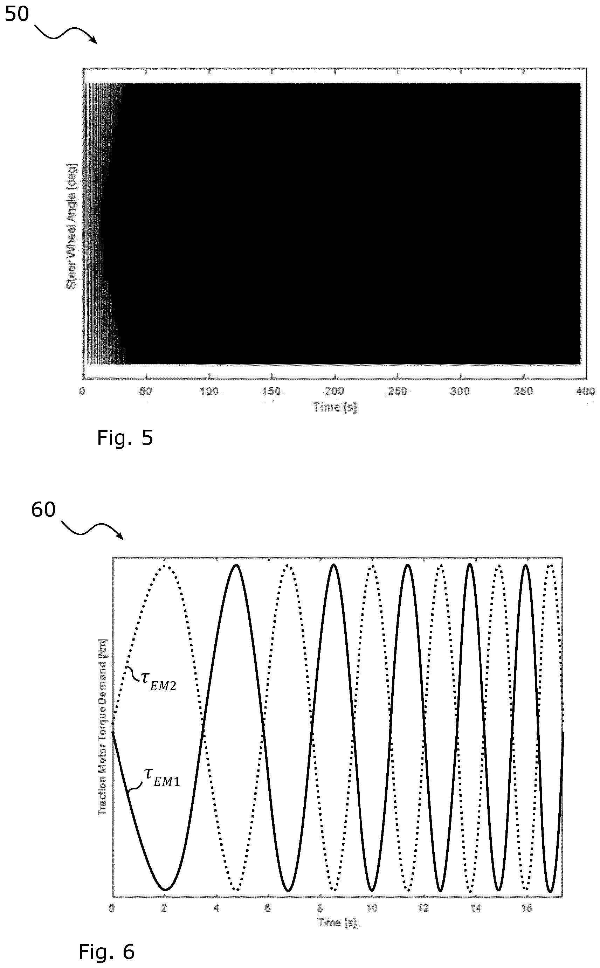

Figure 4 shows the profile 40 of steering wheel angle frequency, where *k_{f} =* 0.025 and *f*₀ = 0.1 Hz. To guarantee the accuracy of the identification, different amplitudes of swept sine wave inputs A may be used at a given vehicle speed, provided that the amplitude of lateral acceleration remains less than 1 *m*/*s*² during the manoeuvre. Figure 5 shows the profile of the steering wheel angle 50 used in the steering manoeuvres.A linearly swept sine wave is used as the direct yaw moment input to extract datasets ${\left\{{I}_{{rM}_{z}}:{O}_{{rM}_{z}}\right\}}_{i}$ where *δ_{SW}* = 0 and V *= i* (constant speed). The direct yaw moment input is used to calculate the actuator demands *τ*_{*EM*1} and *τ*_{*EM*2}. ${M}_{z} = A ⋅ sin \left[2π\left({f}_{0}t+\frac{{k}_{f}}{2}{t}^{2}\right)\right] ,$ ${τ}_{EM 1} = - {k}_{G} ∗ \frac{{R}_{r} ∗ {M}_{z}}{d} ,$ ${τ}_{EM 2} = {k}_{G} ∗ \frac{{R}_{r} ∗ {M}_{z}}{d}$

Where *Rᵣ* - tire rolling radius, *k_{G}* - EM gear ratio, *d* - rear track width. Figure 6 shows the profile of the torque demands for EM1 and EM2 used in the steering manoeuvres.

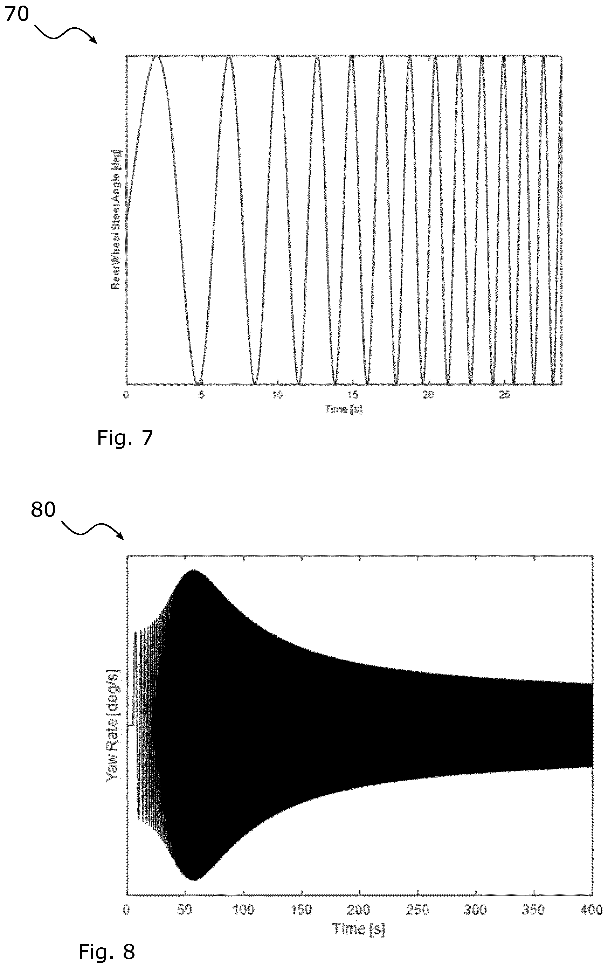

Alternatively, if the actuation mechanism is rear axle steering, the yaw rate excitation datasets ${\left\{{I}_{{rδ}_{RA}}:{O}_{{rδ}_{RA}}\right\}}_{i}$ may be extracted using rear axle steering as the input i Figure 7 shows the rear axle steering angle demand 70 calculated using the excitation input, it assumes the rear left and right wheels 2 have equal angles in the same direction.

Using the excitation inputs described above, the frequency spectrums of the yaw rate response to steering wheel, direct yaw moment or rear axle steering inputs can be found, this is done through simulation using a validated high-fidelity 14DOF AVL VSM vehicle model and MF52 tire model with >90% accuracy to the real vehicle. The modelled vehicle is a Tesla Model S with an AVL rear twin machine EDU only.

Figure 8 shows the yaw rate response to the direct yaw moment excitation input 80, particularly yaw rate response of a high fidelity 14DOF vehicle model to a swept sine wave direct yaw moment input at 90 kph. The direct yaw moment and steering inputs have a common rate of change of frequency *k_{f}* and initial frequency *f*₀.

### System identification

System identification refers to the estimation of the transfer function parameters of a continuous-time or discrete-time transfer function knowing at least the following:
1. Skeleton model,
2. Time domain input-output data,
3. Weighting prefilter ℓ(.).

The excitation datasets ${\left\{{I}_{{rδ}_{SW}}:{O}_{{rδ}_{SW}}\right\}}_{i}$ and ${\left\{{I}_{{rM}_{z}}:{O}_{{rM}_{z}}\right\}}_{i}$ are used as the time domain input-output data in order to estimate the continuous-time or discrete-time transfer functions ${G}_{{rδ}_{{SW}_{i}}}^{SI} \left(s\right)$ and ${G}_{{rM}_{{z}_{i}}}^{SI} \left(s\right)$ at the given vehicle speed.

### Estimation Algorithm

An estimation algorithm minimizes the difference between the model output *y_{model}*(*t*) and the measured output *yₘₑₐₛ*(*t*) from the excitation datasets. The minimization criterion is a weighted norm of the error, v(t), where $v \left(t\right) = {y}_{meas} \left(t\right) - {y}_{model} \left(t\right) ,$

The algorithm adjusts the transfer function parameters such that the norm of this error is as small as possible, this is done by:
a) The estimation algorithm initializes the estimable parameters (*K̂₁, τ̂*₁*,* ζ̂₁, *ω̂*_{n₁} ...) ().
b) The initialized parameters are updated using a nonlinear least-squares search method, the objective of the search method is to minimize the weighted prediction error norm (using weighting prefilter).
c) This estimation is iterated until the model change is less than the tolerance (typically a very small number e.g. 1e-4) or the maximum number of iterations specified is reached.

The weighting prefilter used in step (b) is used to emphasize the frequency range of interest, this is achieved by optimizing the minimization of *v*(*t*) in the frequency range specified by the filter or, ${v}_{f} \left(t\right) = l \left(v\left(t\right)\right)$

This is essentially equivalent to applying a filter to the excitation dataset prior to estimating the transfer function parameters. A second order low pass filter with a cut-off frequency of *f_{c}* may be used as the weighting prefilter and is applied to the excitation datasets. $l \left(s\right) = \frac{{{ω}_{n}}^{2}}{{s}^{2} + 2 {ζω}_{n} + {{ω}_{n}}^{2}}$

Given the structure of the semi-empirical model, ${r}_{i}^{SI} \left(s\right) = {G}_{{rδ}_{{SW}_{i}}}^{SI} \left(s\right) ⋅ {δ}_{SW} \left(s\right) + {G}_{{rM}_{{z}_{i}}}^{SI} \left(s\right) ⋅ {M}_{z} \left(s\right)$ $i = \left(\begin{matrix}50 \\ 60 \\ ⋮ \\ 200\end{matrix}\right) kph ,$

The system identification feedforward controller can be defined through model inversion as, ${M}_{{Z}_{{FF}_{i}}} \left(s\right) = \frac{{r}_{ref} \left(s\right) - {G}_{{rδ}_{i}}^{SI} \left(s\right) ⋅ {δ}_{SW} \left(s\right)}{{G}_{{rM}_{{z}_{i}}}^{SI} \left(s\right)}$

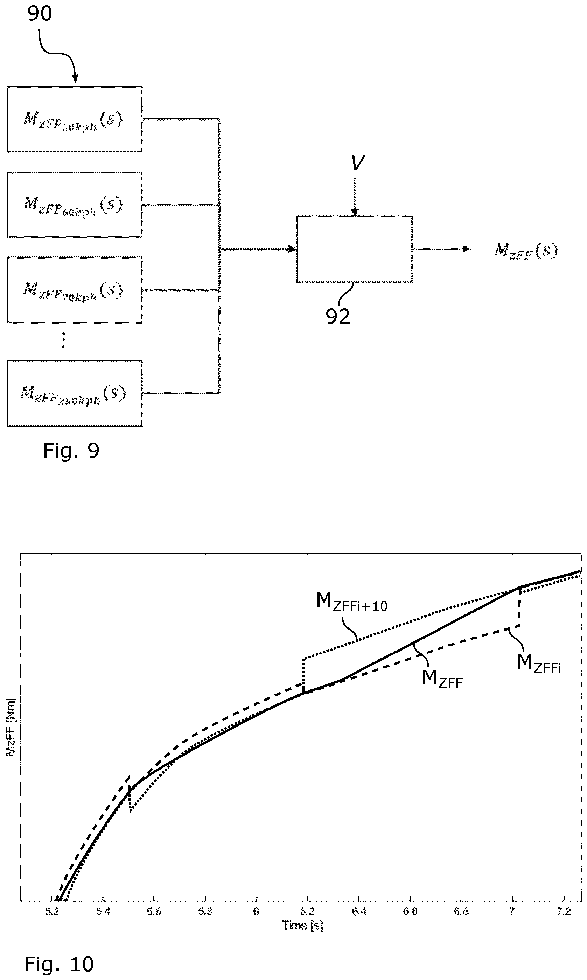

Figure 9 displays how the system identification feedforward direct yaw moment controller 16 calculates a plurality of direct yaw moment demands ${M}_{{Z}_{{FF}_{i}}} \left(s\right)$ from a plurality of identified vehicle models 90 which are blended into a single control action *M_{Z_{FF}}*(*s*) based on vehicle speed V in a blending function 92.

If the vehicle speeds chosen for the excitation and identification are discretized every e.g. 10 kph, the demanded feedforward direct yaw moment is a weighted function of the nearest two system identification controllers to the vehicles current speed or, ${M}_{{Z}_{FF}} = {M}_{{Z}_{{FF}_{i}}} - F \left({M}_{{Z}_{{FF}_{i}}}-{M}_{{Z}_{{FF}_{i} + 10}}\right)$ the feedforward controller *M_{Z_{FF}}* can be used in the vehicle dynamics controller 4 to control the direct yaw moment of the vehicle 1.

Practically, we may define i as a function of vehicle speed V, in order to choose the nearest two controllers to activate. $i \left(V\right) = \left\{\begin{matrix}50 , 0 \leq V < 59 kph \\ 60 , 59 \leq V < 69 kph \\ ⋮ \\ 190 , V \geq 189 kph\end{matrix}\right.$

The two nearest controllers are blended using weighting function *F*(*i, V*) which compares the current vehicle speed to the chosen i in order to determine the correct fusion of both controllers. $F \left(i, V\right) = \left\{\begin{matrix}0 , & i = V \\ f \left(i, V\right) , & V > i \\ 1 , & f \left(i, V\right) > 1\end{matrix}\right.$

The function *f*(*i, V*) defines the ratio between the two controllers when the current vehicle speed is greater than the current i. This could be a linear function for example, $f \left(i, V\right) = c ∗ \left(V-i\right)$

It is important to note that a large *c* would result in discontinuous switching between controllers, and not the bumpless transfer intended. Alternatively, a tangent, cubic or quadratic function may be used, for example, $f \left(i, V\right) = arctan \left(k∗\left(V-i\right)\right)$

Figure 10 displays the system identification controllers ${M}_{{Z}_{{FF}_{i}}}$ and ${M}_{{Z}_{{FF}_{i + 10}}}$ and the resulting feedforward direct yaw moment demand *M_{Z_{FF}}* after weighting. This shows the discontinuous switching between controllers when indexing variable i changes (step changes in dotted and dashed lines), and the effectiveness of the weighting function *F*(*i,V*) to achieve bumpless transfer between controllers, illustrated by the smooth transitions of the continuous line from one controller to the other. As a linear weighting function i.e. *f*(*i, V*) *= c * (V - i)* can be used.

The total direct yaw moment demand is converted to actuator demands, for a typical vehicle architecture shown in figure 1, the actuators are the electric motors 3. The direct yaw moment demand contributions from the feedforward controller 18 and the feedback controller 16 are summed, saturated and rate limited to ensure the vehicle dynamics controller 4 does not induce vehicle instability or actuator damage using an adaptive weighting function contained in the controlled fusion 20 defined as, ${M}_{Z} = {M}_{{Z}_{FB}} + {M}_{{Z}_{FF}} ⋅ \left(1-α\right)$

Where *M_{Z}* - total yaw moment demand, *M_{Z_{FF}}* - system identification feedforward control demand, *M_{Z_{FB}}* - feedback yaw moment control demand and *α* - weighting variable, defined as, $α \left({a}_{y}\right) = \frac{1}{1 + {e}^{a - k \left({a}_{y}-{a}_{{y}_{LIN}}\right)}}$

The calibratable threshold for the end of the linear region, denoted as *a_{y_{LIN}},* defines the lateral acceleration at which the feedforward controller's tracking performance begins to degrade due to unmodelled nonlinear tyre force characteristics at high slip angles. This threshold has been calibrated using constant radius tests resulting at 6 m/s² for this vehicle (and tyres) to ensure optimal performance within the linear handling range while accounting for nonlinear tyre dynamics. Practically, *a_{y_{LIN}}* may be a function of estimated road-tyre friction by the vehicle dynamics observer 5.

To ensure a smooth transition from feedforward to feedback control, the steepness parameter (*k*) of the weighting variable (*α*) has been carefully calibrated. This parameter governs the progressive reduction of feedforward control efficacy as lateral acceleration increases beyond *a_{y_{LIN}}.* Specifically, from 6 m/s² to ~9 m/s², the contribution of the feedforward controller gradually diminishes, ensuring a controlled and stable transfer. By ~9 m/s², the yaw moment contribution transitions entirely to the feedback controller, which compensates for vehicle dynamics in the highly nonlinear region.

Additionally, a first-order filter with a time constant of 0.5 s is applied to *α* to attenuate abrupt variations in the yaw moment control demand. This filtering mitigates potential excitation of unsettled yaw dynamics, allowing the feedback controller to effectively converge to the required yaw moment in the absence of the feedforward contribution before complete transfer.

The total demanded direct yaw moment *M_{z}* along with the driver accelerator pedal torque demand *Fₓ* are used to compute the actuator demands *τ*_{*EM*1}*, τ*_{*EM*2}*.*

The above explanations of the embodiments describe the present invention exclusively in the context of examples.

### List of Reference Numbers

- 1: vehicle
- 2: tire
- 3: electric motor
- 4: vehicle dynamics controller
- 5: vehicle dynamics observer
- 6: steering wheel angle sensor
- 7: acceleration pedal, ac
- 8: break pedal, bp
- 9: rear axis
- 10: inertial measurement unit, IMU
- 12: Direct yaw moment controller
- 14: reference vehicle model
- 16: System identification feedback controller
- 18: feedback controller
- 20: control fusion
- 22: control allocator
- 24: reference steady state model
- 26: reference dynamics model
- 30a-g: steps of creating the feedforward controller
- 40: profile of steering wheel angle frequency
- 50: profile of steering wheel angle
- 60: electric machine torque demands for direct yaw moment excitation input
- 70: rear wheel steering angle demand
- 80: yaw rate response to the direct yaw moment excitation input
- 90: vehicle models
- 92: blending function
${M}_{{Z}_{FF}}^{LSTM}$ Linear single-track model based feedforward direct yaw moment demand.
*M*_{Z} direct yaw moment input (Nm)
*M_{Z_{FF}}* system identification feedforward direct yaw moment demand (Nm)
*M_{Z_{FB}}* feedback direct yaw moment demand (Nm)
*δ_{SW}* steering wheel angle input (deg)
${r}_{i}^{SI} \left(s\right)$ transfer function of semi-empirical model identified for different vehicle speeds (deg/s)
${r}_{ij}^{SI} \left(s\right)$ transfer function of semi-empirical model identified for different vehicle speeds and vehicle modes (deg/s)
*r_{ref}* (*s*) transfer function of reference yaw rate response (deg/s)
*r_{ref_{SS}}* steady state reference yaw rate (deg/s)
*r_{dyn}* dynamic state reference yaw rate (deg/s)
*τ*_{*EM*1} rear left electric machine torque demand (Nm)
*τ*_{*EM*2} rear right electric machine torque demand (Nm)
*V* measured vehicle speed (m/s)
*r* measured yaw rate (deg/s)
*Fₓ* Driver torque demand from accelerator pedal (Nm)
*I_{rδ_{SW}}* Input data of excitation manoeuvre with steering wheel input (deg)
*I_{rδ_{RA}}* Input data of excitation manoeuvre with rear axle steering input (deg)
*O_{rδ_{SW}}* Output data of excitation manoeuvre with steering wheel input (deg/s)
*O_{rδ_{RA}}* Output data of excitation manoeuvre with rear axle steering input (deg/s)
*I_{rMz}* Input data of excitation manoeuvre with direct yaw moment input (Nm)
*O_{rM_{z}}* Output data of excitation manoeuvre with direct yaw moment input (deg/s)
*k_{f}* Rate of change of frequency of excitation input (Hz/s)
*f*₀ Starting frequency of excitation input (Hz)
*K_{I}* Integral gain of feedback controller (Nm/deg/s)
i vehicle speed indexing variable (kph)
j Vehicle drive mode indexing variable (-)

## Claims

1. Method for creating a feedforward controller (*M_{Z_{FF}}*) for controlling a direct yaw moment of a vehicle (1) and/or for controlling a steering of a vehicle (1) with rear axle steering, comprising the steps of:
- selecting a transfer function (*r_{ref}* (*s*)) of a reference vehicle model (14),
- performing steering maneuvers at different predetermined vehicle speeds (V) with the vehicle (1),
- collecting vehicle data, including the yaw rate response to a steering wheel angle during the steering maneuvers,
- identifying a first transfer function of a direct yaw moment input (*M_{Z}*) to the yaw rate for the vehicle speeds (V),
- Identifying a second transfer function of the steering wheel angle (*δ_{SW}*) to the yaw rate (r) for the different vehicle speeds (*V*)
- defining a semi-empirical model ( ${r}_{i}^{SI} \left(s\right)$), as the sum of the first transfer function multiplied by the direct yaw moment *M*_{Z} and the second transfer function multiplied by the steering wheel angle (*δ_{SW}*); and
- creating the feedforward controller (*M_{Z_{FF}}*) by inverting the semi-empirical model ( ${r}_{i}^{SI} \left(s\right)$)*.*

2. Method according to claim 1, wherein the collected vehicle data is filtered by a second order filter.

3. Method according to any of the preceding claims, wherein the feedforward controller (*M_{Z_{FF}}*) consists of a number of different sub-models (90) for each of the vehicle speeds (*V*) and a blending function (92), wherein a control action for a current vehicle speed (*V*) is calculated by calculating a direct yaw moment as a result of the blending function (92) blending a first sub-model of a vehicle speed (*V*) lower than the present speed (V) and a second sub-model of a vehicle speed higher than the present speed (*V*).

4. Method according to any of the preceding claims, wherein the steering maneuvers comprise a steering wheel input frequency designed as a linearly swept sine wave.

5. Method according to claim 4, wherein the steering wheel input frequency is in the range of 0.1 Hz to 6Hz, preferably in the range of 0.2 Hz to 4 Hz.

6. Method according to any of the preceding claims, wherein the vehicle speed (V) of a steering maneuver is constant.

7. Method according to any of the preceding claims, wherein the vehicle (1) is steered on its rear wheel axis (9).

8. Method according to any of the preceding claims, wherein the vehicle (1) is a virtual vehicle in form of a model.

9. Method according to any of the preceding claims, wherein the feedforward controller (*M_{Z_{FF}}*) is created for different driving modes.

10. Feedforward controller (*M_{Z_{FF}}*) created by a method according to any of the previous claims.

11. Direct yaw moment controller (12) comprising a feedforward controller (*M_{Z_{FF}}*) according to claim 10, a feedback controller (18) and a control fusion (20), wherein the fusion control is adapted to controlling the fusion of the feedforward controller (*M_{Z_{FF}}*) and the feedback controller 18 based on a measured and/or estimated lateral acceleration of the vehicle (1).

12. Method for controlling a direct yaw moment of a vehicle (1) and/or for controlling a steering of a vehicle (1) with rear axle steering, wherein a current speed (V) and a current steering wheel angle (***δ_{SW}***) of the vehicle (1) is measured and actuator demands are calculated by a feedforward controller (*M_{Z_{FF}}*) according to claim 10 or a direct yaw moment controller according to claim 11.
